# EUROPÄISCHE PATENTSCHRIFT

(11) **EP 0 452 271 B1**
(45) Veröffentlichungstag und Bekanntmachung des Hinweises auf die Patenterteilung: **09.08.1995**
(21) Anmeldenummer: 91810252.6
(22) Anmeldetag: 05.04.1991
(51) Int. Cl.: B65G 47/38, F16B 1/04

(54) **Verriegelungseinrichtung an einer Welle**
Shaft locking device
Dispositif de verrouillage d'un arbre

(30) Priorität: 11.04.1990 CH 1240/90
(43) Veröffentlichungstag der Anmeldung: 16.10.1991
(73) Patentinhaber: GRAPHA-HOLDING AG, 6052 Hergiswil (CH)
(72) Erfinder: Maier, Willy, CH-8302 Kloten (CH)

(56) Entgegenhaltungen:
- EP-A- 0 230 919
- WO-A-81/01999
- FR-A- 1 349 737

## Beschreibung

Die Erfindung betrifft eine Einrichtung nach dem Oberbegriff des unabhängigen Patentanspruchs 1.

In der FR-A-1 349 737 sind zwei Rotationsantriebe beschrieben, bei denen die Antriebs- und Abtreibswelle bezüglich eines festen Gehäuses in jeder Drehstellung arretierbar sind. Bei beiden Ausführungen ist ein Stift radial bzw. axial verschiebbar in der Antriebswelle gelagert.

Die bei den genannten Rotationsantrieben vorgesehenen Verriegelungen würden sich bei einem Wagen eines Verteilförderers für Stückgut nicht eignen. Bei einem solchen Wagen wird mittels des Antriebes eine Tragplatte in Laufrichtung gesehen nach links oder nach rechts verschwenkt und jeweils in der horizontalen Lage verriegelt. Wird ein solcher Wagen für den Transport von schweren Postpaketen eingesetzt, so werden häufig starke Schläge auf die Tragplatte und somit auf die Verriegelung ausgeübt. Da solche Verteilförderer in der Regel sehr viele Wagen aufweisen, sollte die Verriegelung nicht nur robust sondern auch sehr einfach ausführbar sein. Bei den bekannten Rotationsantrieben ist weder die Anforderung an die Robustheit noch an die Einfachheit erfüllt.

Bei einem Verteilförderer gemäss der WO-A-8 101 999 ist eine Verriegelung mittels einer Taste vorgesehen, welche eine Antriebsscheibe in ihrer mittleren Lage sichert. Beim Verteilförderer gemäss der EP-A-0 230 919 sind Verriegelungsmittel vorgesehen, die an jeder Abgabestation durch Betätigung eines Hebels entriegelt werden können.

Der Erfindung liegt die Aufgabe zugrunde, eine Einrichtung der genannten Art zu schaffen, die einfacher und robuster realisierbar ist und die sich insbesondere für einen Wagen eines Verteilförderers für Stückgut eignet.

Die Aufgabe wird durch die Erfindung gemäss dem kennzeichnenden Teil von Patentanspruch 1 gelöst.

Nach einer vorteilhaften Weiterbildung der Erfindung weist der Entriegelungsteil schräge Flächen auf, welche die Klinke bei einer begrenzten Drehbewegung des Entriegelungsteils auslenken. Mit dieser Auslenkung der Klinke wird dieser ausser Eingriff mit dem Verriegelungsteil gebracht. Es hat sich gezeigt, dass hier eine Drehbewegung von lediglich etwa 3° genügt, um die Klinke ausser Eingriff zu bringen.

Gemäss einer Weiterbildung der Erfindung wird die Klinke gegen die Rückstellkraft einer Feder ausgelenkt. Wird die Last durch eine Drehbewegung der Welle wieder in die Ruhelage gebracht, so bringt die Feder die Klinke von selbst wieder in die Verriegelungsposition. Weitere vorteilhafte Vorteile ergeben sich aus den übrigen abhängigen Ansprüche sowie der nachfolgenden Beschreibung.

Ein Ausführungsbeispiel der Erfindung wird anhand der Zeichnungen näher erläutert. Es zeigen:
- Fig. 1: eine Seitenansicht eines Wagens eines Verteilförderers mit Kettenantrieb,
- Fig. 2: eine Draufsicht auf die Verriegelungseinrichtung,
- Fig. 3: eine Seitenansicht einer Klinke,
- Fig. 4: eine Seitenansicht eines Verriegelungsteils,
- Fig. 5: eine Seitenansicht eines Entriegelungsteils, und
- Fig. 6: eine Teilansicht der Verriegelungseinrichtung.

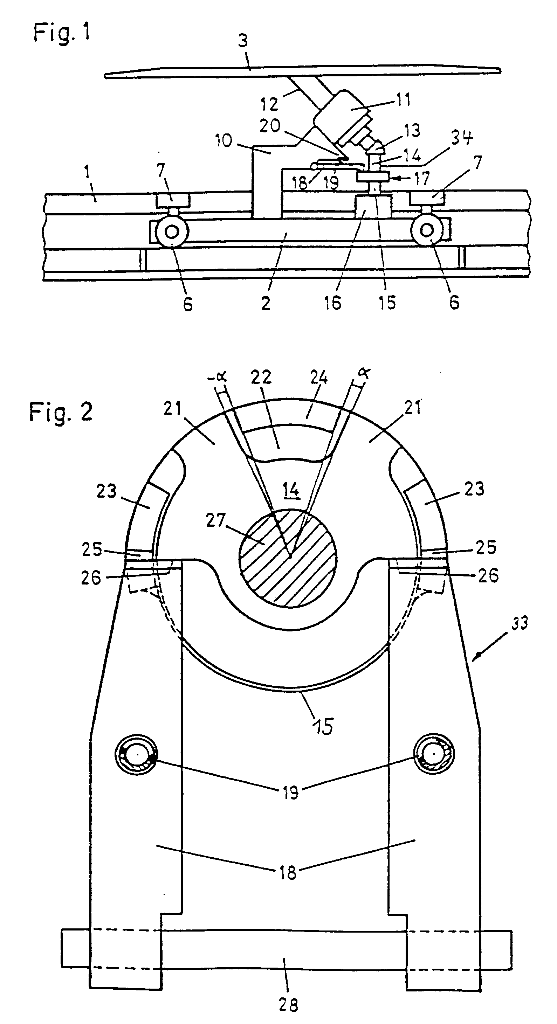

Die Fig. 1 zeigt den Aufbau eines Wagens 2 eines an sich bekannten Verteilförderers für Stückgut. Der Wagen 2 besitzt vier Laufrollen 6, mit denen er in einer Schiene 1 abrollt. Zwei Führungsrollen 7 übernehmen die horizontale Führung, während der Antrieb des Wagens 2 in bekannter Weise durch eine endlose, umlaufende Kette erfolgt. Das Gestell 10 weist einen Lagerkopf 11 für eine schräge Achse 12 auf, an der eine Tragplatte 3 befestigt ist. Die Achse 12 ist über ein Kreuzgelenk 13 und eine vertikale Welle 34 mit einem Antrieb 16 verbunden. Mit diesem Antrieb 16 wird an den Entladestellen die Welle 34 in der einen oder anderen Richtung gedreht, worauf die Tragplatte 3 auf die eine oder andere Seite der Schiene 1 eine Dreh-Kippbewegung ausführt und ein hier nicht gezeigtes Stückgut in einem Sammelbehälter abrutscht.

Mittels einer Verriegelungseinrichtung 17 wird die Tragplatte 3 in der gezeigten Ruhestellung bis zum erreichen der Entladestation gesichert. An der Entladestation wird die Verriegelungsrichtung 17 entriegelt und durch eine Drehbewegung der Welle 34 die Tragplatte 3 entladen. Nach dem Entladevorgang wird durch eine entgegengesetzte Drehbewegung der Welle 34 die Tragplatte 3 wieder in die horizontale Lage verschwenkt und selbständig durch die Einrichtung 17 wieder verriegelt.

Die in den Fig. 2 bis 6 näher gezeigte Verriegelungseinrichtung 17 weist einen Verriegelungsteil 14, einen Entriegelungsteil 15 sowie eine Klinke 33 auf. Die Welle 34 wird durch die beiden genannten Teile 14 und 15 gebildet. Die Klinke 33 besitzt zwei Arme 18, die unabhängig voneinander um eine horizontale und fest mit dem Gestell 10 verbundene Achse 28 verschwenkbar sind. Zwischen jedem Arm 18 und einem Ansatz 20 des Gestells ist eine Spiralfeder 19 angebracht, die das freie Ende 30 des entsprechenden Arms 18 nach unten auf eine Verriegelungsscheibe 31 des Verriegelungsteils 14 drückt. Diese Verriegelungsscheibe 31 ist in eine Ausnehmung 22 einer Entriegelungsscheibe 32 des Entriegelungteils 15 eingesetzt. Zwei radial sich nach aussen erstreckende, im Abstand zueinander angeordnete Nocken 21 der Verriegelungsscheibe 31 umgreifen einen Mitnehmernocken 24 der Entriegelungsscheibe 32 derart, dass im verriegelten Zustand gemäss Fig. 2 der Entriegelungsteil 15 in der einen oder anderen Drehrichtung um einen Winkel α bzw. -α gedreht werden kann, ohne hierbei den Verriegelungsteil 14 mitzudrehen. Bei einer Drehung über die genannten Winkel hinaus wird der Verriegelungsteil 14 mitgedreht und die Tragplatte 3 in der genannten Weise verschwenkt.

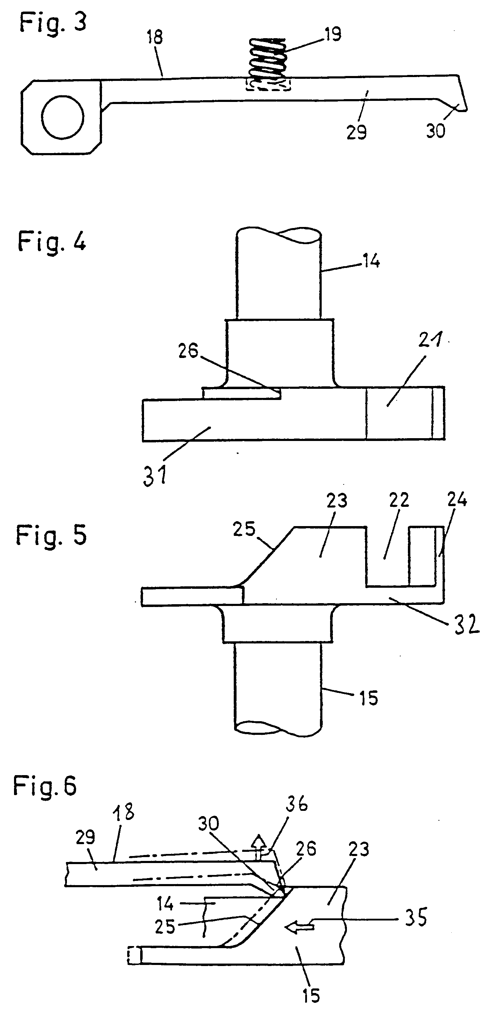

Wird der Entriegelungsteil 15 in der Drehrichtung gemäss Fig. 2 gesehen im Uhrzeigersinn gedreht, so wird noch vor dem Ueberschreiten des Winkels α in Fig. 2 der rechte der beiden Arme 18 am freien Ende 16 angehoben und dabei über eine Anschlagfläche 26 des Verriegelungsteils 14 angehoben. Diese Schwenkbewegung des genannten Arms 18 wird durch eine schräge Fläche 25 eines an der Entriegelungsscheibe 32 angeordneten Nockens 23 gesteuert. Die Fig. 6 illustriert diesen Entriegelungsvorgang. In dieser Figur ist die verriegelte Position mit ausgezogenen Strichen dargestellt. Die Arme 18 ruhen hier mit dem vorderen Ende auf dem Verriegelungsteil 14 und stossen frontseitig jeweils an einen Anschlag 26 des Verriegelungsteils 14. Wird der Entriegelungsteil 15 in Richtung des Pfeiles 35 in die strichpunktiert dargestellte Lage verschwenkt, so wird der Arm 18 zwangsläufig durch die schräge Fläche 25 des Entriegelungsteils 15 in Richtung des Pfeiles 36 nach oben in die strichpunktiert gezeigte Schwenklage geschoben. In dieser Position befindet sich das vordere Ende 30 des Arms 18 knapp über der Anschlagefläche 26, so dass der Entriegelungsteil 15 weiter in Richtung des Pfeils 35 gedreht werden kann. Nach dem Ueberschreiten des Winkels α wird wie oben erwähnt durch den Mitnehmernocken 24 auch der Verriegelungsteil 14 in dieser Drehrichtung mitgedreht. Der andere der beiden Arme 18 (in Fig. 2 der linke Arm) entfernt sich ohne verschwenkt zu werden in Umfangsrichtung von seiner Anschlagfläche 26. Wird der Entriegelungsteil 15 in der anderen Richtung gedreht, so wird entsprechend in Fig. 2 der linke der beiden Arme 18 verschwenkt, während der rechte Arm ohne verschwenkt zu werden sich in Umfangsrichtung von seiner Anschlagfläche 26 entfernt.

Soll die Tragplatte 3 wieder in die horizontale Position zurückgeschwenkt und verriegelt werden, so wird der Entriegelungsteil 15 in entgegengesetzter Drehrichtung so weit gedreht, bis der Verriegelungsteil 14 die in Fig. 2 gezeigte Stellung erreicht, in welcher der verschwenkte Arm durch die Druckfeder 19 nach unten in die verriegelnde Position verschwenkt wird. Wie ohne weiteres ersichtlich, wird durch das Zuammenwirken des einen Armes 18 mit der entsprechenden Fläche 25 auch der Entriegelungsteil 15 in die in Fig. 2 gezeigte symmetrische Lage gebracht. In dieser ist dann die Tragplatte 3 in der horizontalen Lage verriegelt und kann an der nächsten Entladestation in der geschilderten Weise nach links oder nach rechts verschwenkt werden.

Die erfindungsgemässe Verriegelungseinrichtung eignet sich besonders für einen Wagen eines Verteilförderers für Stückgut. Die Tragplatte 3 kann hierbei auch eine einfache Kippbewegung um eine horizontal verlaufende Welle ausführen. Entsprechend könnte hier die Welle 34 dann auch horizontal verlaufen. Die Erfindung ist jedoch nicht auf die genannte Anwendung beschränkt.

## Patentansprüche

1. Verriegelungseinrichtung an einer drehbar gelagerten und mit einem Antrieb (16) verbundenen Welle (12), wobei die Einrichtung die Welle (12) bezüglich eines Gestells (10) in beiden Drehrichtungen lösbar gegen ein von einer Last (3) ausgehendes Verdrehen sichert, wobei die Welle (12) einen mit der Last (3) verbundenen Verriegelungsteil (14) und einen mit dem Antrieb (16) verbundenen Entriegelungsteil (15) aufweist und in einer Ruhestellung der Entriegelungsteil (15) in beiden Drehrichtungen bezüglich des Verriegelungsteils (14) begrenzt verdrehbar ist, dadurch gekennzeichnet, dass der Entriegelungsteil (15) während einer solchen begrenzten Drehbewegung eine am Gestell (10) gelagerte Klinke (18) vom Verriegelungsteil (14) abhebt und dadurch die Welle (12) entriegelt.

2. Einrichtung nach Anspruch 1, dadurch gekennzeichnet, dass der Entriegelungsteil (15) schräge Flächen (25) aufweist, an welchen die Klinke (33) bei einer begrenzten Drehbewegung des Entriegelungsteil (15) ausgelenkt und ausser Eingriff mit dem Verriegelungsteil (14) gebracht wird.

3. Einrichtung nach Anspruch 1 oder 2, dadurch gekennzeichnet, dass die Klinke (33) zwei Arme (18) aufweist, die jeweils mit einer schrägen Fläche (25) zusammen-wirken und die jeweils die Welle (12) in einer Drehrichtung verriegeln.

4. Einrichtung nach einem der Ansprüche 1 bis 3, dadurch gekennzeichnet, dass beim Entriegeln die Klinke (33) gegen die Kraft wenigstens einer Feder (19) verschwenkt wird.

5. Einrichtung nach einem der Ansprüche 1 bis 4, dadurch gekennzeichnet, dass der Verriegelungsteil (14) und der Entriegelungsteil (15) jeweils eine sich zur Längsrichtung der Welle radial erstreckende Verriegelungsscheibe (31) bzw. Entriegelungsscheibe (32) aufweisen, wobei ein Mitnehmernocken (24) der einen Scheibe in eine Ausnehmung der anderen Scheibe derart eingreift, dass in der Ruhestellung der Entriegelungsteil (15) in beiden Drehrichtungen um einen Winkel (α,-α) bis zum Anschlag des Mitnehmernockens (24) drehbar ist.

## Claims

1. Locking device on a shaft (12) which is rotatably mounted and is connected to a drive (16), the device securing the shaft (12) relative to a frame (10) so as to be releasable in both directions of rotation against rotation resulting from a load (3), the shaft (12) having a locking part (14) connected to the load (3) and an unlocking part (15) connected to the drive (16) and, in a rest position, the unlocking part (15) being rotatable to a limited extent in both directions of rotation relative to the locking part (14), characterized in that the unlocking part (15) lifts a latch (18), mounted on the frame (10), up off the locking part (14) during such a limited rotary movement and thereby unlocks the shaft (12).

2. Device according to Claim 1, characterized in that the unlocking part (15) has sloping surfaces (25) on which the latch (33) is deflected during a limited rotary movement of the unlocking part (15) and is disconnected from the locking part (14).

3. Device according to Claim 1 or 2, characterized in that the latch (33) has two arms (18) which interact in each case with a sloping surface (25) and which in each case lock the shaft (12) in one direction of rotation.

4. Device according to one of Claims 1 to 3, characterized in that, during unlocking, the latch (33) is pivoted counter to the force of at least one spring (19).

5. Device according to one of Claims 1 to 4, characterized in that the locking part (14) and the unlocking part (15) have in each case a locking disc (31) or unlocking disc (32) respectively, extending radially relative to the longitudinal direction of the shaft, a carrier cam (24) of the one disc engaging in a recess of the other disc in such a way that, in the rest position, the unlocking part (15) is rotatable in both directions of rotation through an angle (α,-α) up to the stop of the carrier cam (24).

## Revendications

1. Dispositif de verrouillage sur un arbre (12) monté à rotation et relié à un entraînement (16), le dispositif bloquant en rotation de manière amovible l'arbre (12) par rapport à un bâti (10), dans les deux directions de rotation et à l'encontre d'une rotation provenant d'une charge (3), l'arbre (12) présentant une partie de verrouillage (14) reliée à la charge (3) et une partie de déverrouillage (15) reliée à l'entraînement (16), et la partie de déverrouillage (15) pouvant, dans une position de repos, être déplacée en rotation relative limitée par rapport à la partie de verrouillage (14), dans les deux directions de rotation, **caractérisé** en ce que la partie de déverrouillage (15), pendant un tel déplacement limité en rotation, dégage de la partie de verrouillage (14) un cliquet (18) monté sur le bâti (10) et déverrouille ainsi l'arbre (12).

2. Dispositif selon la revendication 1, **caractérisé** en ce que la partie de déverrouillage (15) présente des faces obliques (25), sur lesquelles le cliquet (33) est dévié lors d'un déplacement limité en rotation de la partie de déverrouillage (15), et désengagé d'avec la partie de verrouillage (14).

3. Dispositif selon la revendication 1 ou 2, **caractérisé** en ce que le cliquet (33) présente deux bras (18) qui coopèrent respectivement avec une face oblique (25) et qui verrouillent l'arbre (12) dans une direction de rotation respective.

4. Dispositif selon une des revendications 1 à 3, **caractérisé** en ce que, lors du déverrouillage, le cliquet (33) est pivoté contre la force d'au moins un ressort (19).

5. Dispositif selon une des revendications 1 à 4, **caractérisé** en ce que la partie de verrouillage (14) et la partie de déverrouillage (15) présentent respectivement un plateau de verrouillage (31) ou un plateau de déverrouillage (32) s'étendant radialement à la direction longitudinale de l'arbre, un ergot d'entraînement (24) d'un des plateaux s'engageant dans un évidement de l'autre plateau de telle sorte que, dans la position de repos, la partie de déverrouillage (15) peut être déplacée en rotation dans les deux directions de rotation, d'un angle (α, -α), jusqu'à ce que l'ergot d'entraînement (24) arrive en butée.
